Europäisches Patentamt

European Patent Office

Office européen des brevets

(11) Veröffentlichungsnummer: **0 409 131 A1**

## (12) EUROPÄISCHE PATENTANMELDUNG

(21) Anmeldenummer: 90113559.0

(22) Anmeldetag: 16.07.90

(51) Int. Cl.5: **B25J 15/02**, F16C 19/50

(30) Priorität: 20.07.89 DE 3924099

(43) Veröffentlichungstag der Anmeldung:
23.01.91 Patentblatt 91/04

(84) Benannte Vertragsstaaten:
**DE ES FR GB IT**

(71) Anmelder: **ManuMatik Produktionssysteme GmbH
Schlosserstrasse 15
D-7440 Nürtingen(DE)**

(72) Erfinder: **Henzler, Adolf
Talstrasse 51
D-7440 Nürt.-Raidwangen(DE)**
Erfinder: **Henschel, Karl-Heinz
Tiefenbachstrasse 19
D-7440 Nürtingen(DE)**

(74) Vertreter: **Herrmann, Günther et al
c/o Körber AG Patentabteilung
Kampchaussee 8-32
D-2050 Hamburg 80(DE)**

(54) Geradführung von Drehgelenken.

(57) Es wird eine Vorrichtung zum Bewegen von Drehgelenken entlang einer Bewegungsbahn beschrieben, welche ein erstes Gelenkglied (1), wenigstens ein zweites Gelenkglied (4) und einen die Gelenkglieder gelenkig verbindenden Gelenkbolzen (3) aufweisen. Es ist ein Führungskörper (8) mit einer die Bewegungsbahn des Drehgelenks vorgebenden Führungsfläche (8a) vorgesehen. Bei Bewegungen des Drehgelenks rollt der Gelenkbolzen (3) auf der Führungsfläche (8a) ab. Es ergibt sich dadurch eine spielfreie und verschleißarme Führung für translatorische Bewegungen von Drehgelenken.

Fig. 2

## GERADFÜHRUNG VON DREHGELENKEN

Die Erfindung betrifft eine Vorrichtung zum Bewegen von Drehgelenken entlang einer Bewegungsbahn mit einem ersten Gelenkglied, einem zweiten Gelenkglied und einem die Gelenkglieder gelenkig verbindenden Gelenkbolzen.

In Koppelgetrieben ist es oft erforderlich, daß Gelenke, die zwei oder mehrere Gelenkglieder, Koppeln, Laschen oder Schieber drehbar miteinander verbinden, auf einer Geraden geführt werden müssen. Die dafür erforderlichen Führungen sind meistens mit Gleitschichten versehen, um den Wirkungsgrad zu verbessern und die Lebensdauer der Führungen zu erhöhen. Derartige Gleitführungen können aber nur mit einer Spielpassung und nicht mit einer Preßpassung funktionieren. Außerdem erfordern sie laufende Wartung, so daß sie nicht die Forderung nach Spiel- und Wartungsfreiheit erfüllen. Es sind auch Geradführungen von Drehgelenken bekannt, bei denen die translatorische Führung durch Kugelhülsen erfolgt. Der Nachteil einer solchen Ausführung besteht darin, daß sich die Kugeln der Kugelhülsen durch den kurzen Hub der Drehgelenkbewegung auf den Führungen nur unvollkommen abwälzen. Das bewirkt, daß die Rundführungen unter den Kugeln verschleißen. Die Geradführung durch solche Kugelhülsen erfüllt daher nicht die Forderung nach Verschleißfreiheit über einen längeren Zeitraum bei hoher Belastung.

Der Erfindung liegt die Aufgabe zugrunde, eine weitere Vorrichtung der eingangs beschriebenen Art anzugeben.

Gelöst wird diese Aufgabe gemäß der Erfindung dadurch, daß ein Führungskörper mit einer die Bewegungsbahn des Drehgelenks vorgebenden Führungsfläche vorgesehen ist und daß der Gelenkbolzen bei Bewegungen des Drehgelenks auf der Führungsfläche abrollt.

Der Gelenkbolzen des Drehgelenks dient also gleichzeitig zum Vorspannen der Geradführung.

Vorteilhafte Weiterbildungen und Ausgestaltungen der Erfindung sind in den Unteransprüchen enthalten.

Durch die Erfindung ergibt sich der Vorteil einer spiel- und wartungsfreien Geradführung von Drehgelenken in Koppelgetrieben und Greiferanordnungen. Da nur rotierende Bewegungen der miteinander verbundenen Teile vorgesehen sind, ergibt sich langfristige Verschleißfreiheit auch bei hoher Belastung der Führung. Gemäß der Erfindung ist der ohnehin vorhandene Bolzen des Gelenkes zum Geradführen entlang einer vorgegebenen Führungsfläche vorgesehen. Das ergibt einen einfachen und kostengünstigen Aufbau ohne großen konstruktiven Aufwand. Neben den ohnehin vorhandenen Bauteilen der Drehgelenke ist zusätzlich jeweils nur eine Führungsfläche erforderlich. Die Vorrichtung erweist sich daher gerade bei kleinen Baugrößen als besonders günstig und vorteilhaft. Sie eignet sich insbesondere für den Bau der Greifer von Handhabungseinrichtungen wie Robotern. Besonders günstig ist die Anordnung von jeweils zwei Gelenkpunkten gegeneinander zu realisieren, die beidseits eines Führungskörpers symmetrisch angeordnet sein können. Wird ein Gelenkglied als Schieber von einem Antrieb angetrieben, so können dieses und der Antrieb durch den Führungskörper bzw. die Führungsfläche von Seiten-bzw. Querkräften freigehalten werden. Das ist insbesondere in Greiferanordnungen für hochgenaue Präzisionsarbeiten von Vorteil, da dadurch die Funktionssicherheit des Greifers erhöht wird. Alle Bewegungen sind in Wälzlagern gelagert und vorgespannt und somit spielfrei. Werden die Drehgelenke mit Nadelbüchsen und gehärteten Stiften ausgerüstet, entsteht eine kleine preiswerte Verbindung, welche hoch belastet werden kann, besonders wenn die Führungsflächen ebenfalls gehärtet sind.

Die Erfindung wird nun anhand der Zeichnung näher erläutert. Es zeigen:

Fig. 1 eine Seitenansicht einer Vorrichtung nach der Erfindung,
Fig. 2 einen Schnitt entlang II-II der Fig. 1,
Fig. 3 eine Seitenansicht eines andereren Ausführungsbeispiels der Vorrichtung nach der Erfindung,
Fig. 4 einen Schnitt entlang IV-IV der Fig. 3,
Fig. 5 eine Seitenansicht eines weiteren Ausführungsbeispiels der Vorrichtung nach der Erfindung,
Fig. 6 einen Schnitt entlang VI-VI der Fig. 5 und
Fig. 7 eine Seitenansicht eines Greifers mit einer Geradführung von Drehgelenken nach der Erfindung.

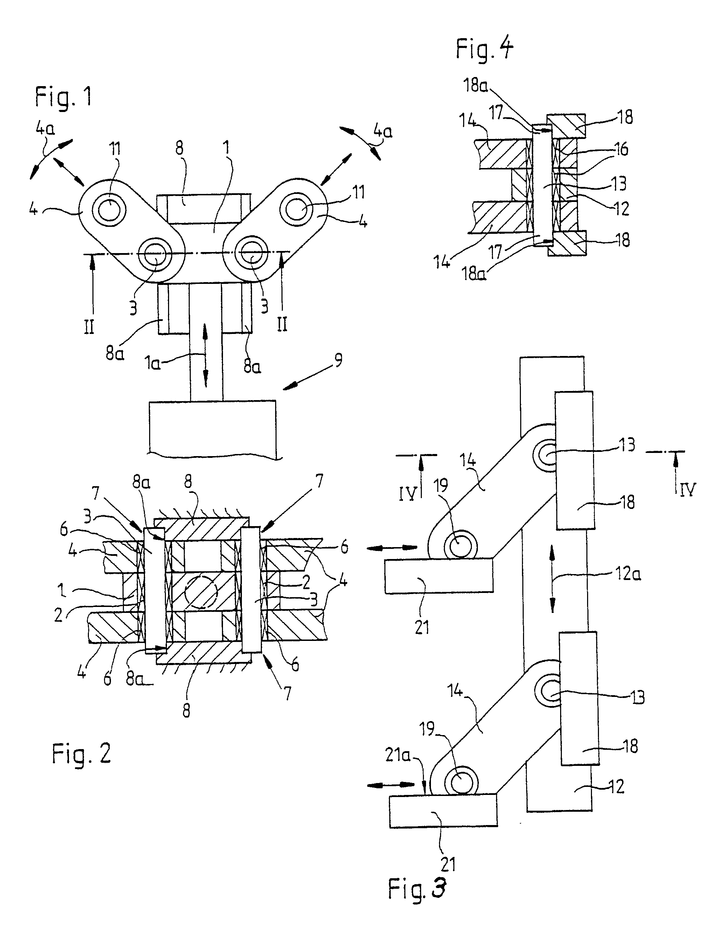

In Fig. 1 und 2 ist ein prinzipielles Ausführungsbeispiel einer Vorrichtung nach der Erfindung in einer Seitenansicht und einem Schnitt der Linie II-II der Fig. 1 schematisch dargestellt. Gleiche Teile sind mit denselben Bezugszeichen versehen. An einem als Schieber 1 ausgebildeten ersten Gelenkglied sind in Lagern 2 parallel zueinander zwei zylindrische Gelenkbolzen 3 gelagert. An jedem Gelenkbolzen 3 sind beidseits des Schiebers 1 jeweils zwei zweite Gelenkglieder in Gestalt von Laschen 4 in Richtung der Doppelpfeile 4a schwenkbar gelagert. Die Lagerstellen 6 der Laschen 4 sind wie die Lager 2 als Nadellager ausgebildet. Die Gelenkbolzen 3 sind so lang, daß sie beidseits axial aus den Lagern herausragen, wobei ihre Enden 7 als zylindrische Laufflächen ausgebildet sind. Zwischen zwei einander radial gegenüberliegenden Bolzenenden 7 ist jeweils ein Führungskörper 8 mit Führungsflächen 8a angeordnet, an denen die Bolzenenden 7 anliegen und auf denen sie bei translatorischen Bewegungen des Schiebers 1 in Richtung eines Doppelpfeiles 1a abrollen. Zum Verschieben des Schiebers 1 ist eine Kolben-Zylinder-Einheit 9 vorgesehen. An weiteren Drehachsen 11, die an den Laschen 4 vorgesehen sind, können zu bewegende Gelenkelemente oder sonstige Bauteile gelagert sein.

Wird die Kolben-Zylinder-Einheit 9 betätigt, so wird der Schieber 1 in Richtung des Doppelpfeiles 1a bewegt, wobei die zylindrischen Laufflächen der Enden 7 der Gelenkbolzen 3 auf den Führungsflächen 8a der Führungskörper 8 abrollen. Dabei ist auf einfache Weise eine spielfreie Führung zu erreichen, die langfristig wartungsfrei und verschleißarm ist. Über die Laschen 4 können beliebige weitere Getriebeelemente oder Maschinenteile bewegt werden, die an den Drehachsen 11 angelenkt sind.

In den Figuren 3 und 4 ist in einer Seitenansicht und einem Schnitt entlang der Linie IV-IV der Fig. 3 ein weiteres Ausführ ungsbeispiel der Vorrichtung nach der Erfindung dargestellt. An einem als erstes Gelenkglied vorgesehenen Schieber 12 sind über Gelenkbolzen 13 als zweite Gelenkglieder Laschen 14 angelenkt. Die Gelenkbolzen 13 sind, wie die Fig. 4 zeigt, wieder in Nadellagern 16 gelagert. Die Gelenkbolzen 13 ragen axial beidseits aus den Lagerstellen heraus und weisen an ihren Enden 17 zylindrische Laufflächen auf, die an Führungsflächen 18a von Führungskörpern 18 unter Vorspannung spielfrei abrollen, wenn der Schieber 12 in Richtung des Pfeiles 12a bewegt wird. Am freien Ende der Laschen 14 ist ein weiterer Gelenkbolzen 19 gelagert, der an wenigstens einem Ende ebenfalls eine zylindrische Lauffläche aufweisen kann, welche an einer Führungsfläche 21a eines weiteren Führungskörpers 21 abrollt. Über die Laschen 14 und die Gelenkbolzen 19 können weitere Getriebeelemente oder Maschinenteile bewegt oder betätigt werden.

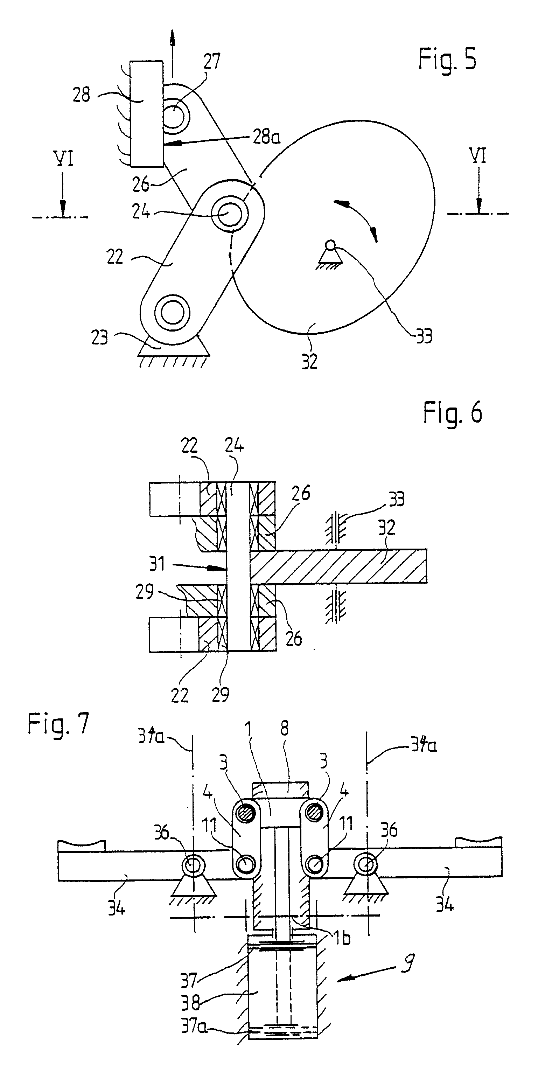

Die Figuren 5 und 6 zeigen ein weiteres Ausführungsbeispiel der Vorrichtung nach der Erfindung in einer Seitenansicht und in einem Schnitt entlang der Linie VI-VI der Fig. 5. Als erstes Gelenkglied sind in diesem Fall parallele Laschen 22 vorgesehen, die mit einem Ende stationär am Maschinenrahmen 23 angelenkt sind. Am freien Ende der Laschen 22 sind über Gelenkbolzen 24 als zweite Gelenkglieder Laschen 26 angelenkt, in deren freiem Ende ein weiterer Gelenkbolzen 27 gelagert ist, der mit wenigstens einem, die Lagerstellen axial überragenden Abschnitt an einer Führungsfläche 28a eines Führungskörpers 28 anliegt. Wie die Fig. 6 im Schnitt zeigt, ist der Gelenkbolzen 24 wieder in Nadellagern 29 gelagert. Zwischen den Laschen 26 weist der Gelenkbolzen 24 eine zylindrische Lauffläche 31 auf, an welcher die Umfangsfläche einer Kurvenscheibe 32 anliegt, die mit einer Achse 33 am Maschinengestell gelagert und in Pfeilrichtung drehbar ist. Bei einer Drehung der Kurvenscheibe 33 rollt der Gelenkbolzen 24 auf der Umfangsfläche der Kurvenscheibe 32 spielfrei ab, wobei die Bedingungen für eine spielfreie Anlage des Gelenkbolzens 24 an der Lauffläche der Kurvenscheibe 32 dann besonders günstig sind, wenn das freie Ende der Lasche 26 gegen eine vertikal wirkende Kraft bewegbar ist, welche die Lasche 26 vertikal belastet. Auch in diesem Falle ist eine exakte Führung der translatorischen Bewegung der Drehgelenke gewährleistet.

Fig. 7 zeigt in einer schematischen Seitenansicht eine weitere praktische Anwendungsmöglichkeit der Vorrichtung nach der Erfindung. Die Drehgelenkführung entspricht dabei der der Figuren 1 und 2, So daß hier für die gleichen Teile dieselben Bezugszeichen verwendet werden wie in den Figuren 1 und 2.

An die Drehachsen 11 der im Zusammenhang mit den Figuren 1 und 2 beschriebenen Laschen 4 sind gemäß Fig. 7 Greiferarme 34 angelenkt, die um relativ zum Greifergehäuse ortsfeste Drehachsen 36 schwenkbar sind. Die offene Greiferstellung ist in Fig. 7 mit ausgezogenen Linien dargestellt. Wird der Kolben 37 im Zylinder 38 in seine gestrichelt dargestellte Endposition 37a bewegt, so bewegt sich der Schieber 1 mit den Gelenkbolzen 3 parallel zu den Führungskörpern 8, so daß die Laufflächen der Gelenkbolzen 3 an den Führungsflächen der Führungskörper 8 abrollen, bis der Schieber die strichpunktiert dargestellte untere Position 1b erreicht. Bei dieser Bewegung des Schiebers 1 schwenken die Laschen 4 nach außen und kippen die Greiferarme 34 um die Drehachsen 36 in ihre vertikale Position 34a, die in Fig. 7 strichpunktiert dargestellt ist. In dieser Position ist der Greifer geschlossen. Zum Öffnen des Greifers verläuft die Bewegung umgekehrt.

Die Vorrichtung nach der Erfindung ist hier im Zusammenhang mit einem Greifer mit Schwenkarmen beschrieben worden. Sie kann natürlich auch bei einem Parallelgreifer, wie er z.B. in der deutschen Patentanmeldung P 39 06 590.1 der Anmelderin beschrieben ist, zum Führen der Drehgelenke eingesetzt werden.

**Ansprüche**

1. Vorrichtung zum Bewegen von Drehgelenken entlang einer Bewegungsbahn mit einem ersten Gelenkglied, einem zweiten Gelenkglied und einem die Gelenkglieder gelenkig verbindenden Gelenkbolzen, dadurch gekennzeichnet, daß ein Führungskörper (8) mit einer die Bewegungsbahn des Drehgelenks vorgebenden Führungsfläche (8a) vorgesehen ist und daß der Gelenkbolzen (3) bei Bewegungen des Drehgelenks auf der Führungsfläche abrollt.

2. Vorrichtung nach Anspruch 1, dadurch gekennzeichnet, daß jeder Gelenkbolzen (3) axial zu den Lagerstellen (6) der Gelenkglieder (1, 4) versetzt wenigstens eine zylindrische Lauffläche (7) aufweist, welche bei Bewegungen des Drehgelenks auf der Führungsfläche (8a) abrollt.

3. Vorrichtung nach Anspruch 1 oder 2, dadurch gekennzeichnet, daß die Gelenkbolzen (3) in Nadellagern (2) in den Gelenkgliedern (1, 4) gelagert sind.

4. Vorrichtung nach einem der Ansprüche 1 bis 3, dadurch gekennzeichnet, daß die Gelenkglieder (1, 4) als Teil eines Koppelgetriebes ausgebildet und vorgesehen sind.

5. Vorrichtung nacha einem der Ansprüche 1 bis 4, dadurch gekennzeichnet, daß das erste Gelenkglied (1) als Schieber ausgebildet und mittels eines Antriebs (9) parallel zur Führungsfläche (8a) bewegbar ist, wobei der Gelenkbolzen (3) auf der Führungsfläche abrollt und daß wenigstens ein zweites Gelenkglied (4) als Koppelglied zum Bewegen wenigstens eines weiteren Elements ausgebildet und angeordnet ist.

6. Vorrichtung nach Anspruch 5, dadurch gekennzeichnet, daß als weitere Elemente die Greifarme (34) eines Greifers einer Handhabungseinheit (Roboter) vorgesehen sind.

7. Vorrichtung nach einem der Ansprüche 1 bis 6, dadurch gekennzeichnet, daß an einem ersten Gelenkglied (1) mittels wenigstens zweier Gelenkbolzen (3) wenigstens zwei zweite Gelenkglieder (4) angelenkt sind, daß zwischen den Gelenkbolzen wenigstens ein Führungskörper (8) mit zwei gegenüberliegenden Führungsflächen (8a) eingepaßt ist und daß die Gelenkbolzen (3) bei Bewegungen des ersten Gelenkgliedes (1) auf den Führungsflächen (8a) abrollen.

8. Vorrichtung nach einem der Ansprüche 1 bis 7, dadurch gekennzeichnet, daß als Führungskörper eine Kurvenscheibe (32) vorgesehen ist.

Fig. 1

Fig. 2

Fig. 4

Fig. 3

Fig. 5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4728137 (HAMED ET AL.)<br>* Spalte 6, Zeilen 23 - 47; Figuren 8-9 * | 1-2, 5-6 | B25J15/02<br>F16C19/50 |
| A | | 7 | |
| | --- | | |
| Y | GB-A-6680AD1889 (E. PINTO DE SOVERAL)<br>30 November 1889<br>* das ganze Dokument * | 1-2, 5-6 | |
| | --- | | |
| A | FR-A-321106 (M. WHITNEY)<br>* Seite 1, Zeile 53 * | 1-2 | |
| | --- | | |
| A | GB-A-119157 (J. W. DRAPER)<br>* das ganze Dokument * | 1-2 | |
| | --- | | |
| A | US-A-3734556 (MISAWA)<br>* Zusammenfassung; Figur 1 * | 5-6 | |
| | ----- | | |

RECHERCHIERTE SACHGEBIETE (Int. Cl.5)

F16H
B25J
F16C

Der vorliegende Recherchenbericht wurde für alle Patentansprüche erstellt

| Recherchenort | Abschlußdatum der Recherche | Prüfer |
|---|---|---|
| DEN HAAG | 26 OKTOBER 1990 | VINGERHOETS A. |

EPO FORM 1503 03.82 (P0403)